# FASCICULE DE BREVET EUROPEEN

(11) **EP 1 238 593 B1**
(45) Date de publication et mention de la délivrance du brevet: **19.10.2005**
(21) Numéro de dépôt: 02290530.1
(22) Date de dépôt: 05.03.2002
(51) Int. Cl.: A23L 1/314, A23B 4/20

(54) **Produit de charcuterie à base de jambon et son procédé de transformation**
Fleischprodukte auf Schinkenbasis und Verfahren zur Herstellung
Ham-based meat products and their method of production

(30) Priorité: 07.03.2001 FR 0103079
(43) Date de publication de la demande: 11.09.2002
(73) Titulaire: LUISSIER, 78220 Viroflay (FR)
(72) Inventeur: Oudin, Catherine, 40300 Peyrehorade (FR)
(74) Mandataire: Doireau, Marc

(56) Documents cités:
- FR-A- 2 483 750
- FR-A- 2 613 589
- FR-A- 2 614 764
- COURTINE R. J.: "Nouveau Larousse Gastronomique ed. 3" 1967 , LAROUSSE , PARIS XP002186515 * page 342 *

## Description

L'invention concerne un produit de charcuterie à base de jambon et son procédé de transformation.

Dans le domaine de la charcuterie, il existe déjà différents types de jambons cuits, crus et secs, fumés ou non. Ces produits possèdent chacun une texture qui leur est propre, ainsi qu'une couleur et un goût particuliers provenant principalement de leur procédé de préparation (affinage notamment) et de la viande d'origine choisie pour réaliser les jambons. Ainsi, le jambon cru possède de manière courante une texture assez sèche et peu fibrée, une couleur sombre et un goût marqué, souvent fumé, tandis que le jambon cuit est plus clair (rosé), avec une texture plus moelleuse et fondante et avec un goût moins prononcé que le jambon cru. Le document FR2614764 décrit des confits de viandes telles que la volaille, le gibier, le lapin.

Les consommateurs étant souvent à la recherche de produits alimentaires changeant de l'ordinaire, que ce soit au niveau du goût, de la présentation ou de la texture, un but de l'invention est de proposer un procédé nouveau de transformation d'un produit de charcuterie à base de jambon permettant d'obtenir un produit final ayant une texture fibrée et plus ferme que celle d'un jambon sec, un goût typé et très parfumé ainsi qu'une couleur spécifique plus claire que celle d'un jambon sec et plus soutenue que celle d'un jambon cuit.

Pour cela, l'invention concerne un produit de charcuterie à base de jambon, caractérisé en ce qu'il se présente sous la forme de lamelles confites dans de la graisse de volaille.

Avantageusement, il s'agit de lamelles de jambon sec présentant un goût et un parfum de canard.

D'une façon générale, chaque lamelle mesure environ 1,5 à 2,5 mm d'épaisseur, environ 1 à 10 cm de longueur et environ 6 à 25 mm de largeur, et de préférence sensiblement 2 mm d'épaisseur, 5 à 7 cm de longueur et 8 mm de largeur.

La présente invention a également pour objet un procédé de transformation d'un produit de charcuterie à base de jambon, caractérisé en ce qu'il comprend les étapes suivantes :
- confire des lamelles dudit produit en les trempant dans de la graisse liquide de volaille animale portée à une température suffisante pour cuire au moins partiellement lesdites lamelles,
- égoutter les lamelles.

D'une façon générale, le procédé comprend de plus une étape préalable de tranchage des lamelles dans un jambon sec, éventuellement fumé, notamment dans le jarret ou l'entame.

Avantageusement, on trempe les lamelles dans de la graisse de canard.

De préférence, la graisse de canard est récupérée après cuisson de confits, suivie par une opération de filtrage.

Dans un mode de mise en oeuvre préférentiel, lors de l'étape de trempage des lamelles, on chauffe la graisse à une température comprise entre environ 120°C et 190°C, et, de manière particulièrement préférée, entre 140°C et 180°C.

A titre d'exemple, la graisse est portée à une température proche de 170°C pendant toute la durée du trempage.

Selon un mode de réalisation préférentiel, on trempe les lamelles dans la graisse chauffée pendant une durée comprise entre environ 4 et 20 secondes, et de manière particulièrement préférée entre 8 et 12 secondes. De cette façon, le gradient de température peut se propager facilement au coeur des lamelles lors de leur trempage dans la graisse, limitant la durée du trempage et améliorant le confisage et la cuisson des lamelles.

Avantageusement, l'égouttage est réalisé par déplacement des lamelles dans l'air, par exemple par vibration.

De cette manière, le produit fini présente un meilleur aspect et la quantité restante de gras est limitée, ce qui permet un emballage plus propre pour l'utilisateur.

D'autres caractéristiques, détails et avantages de l'invention ressortiront à la lecture du complément de description qui suit.

Selon le procédé de la présente invention, on découpe des lamelles d'environ 8 mm de largeur sur 2 mm d'épaisseur et 5 à 7 cm de longueur dans le jarret ou l'entame d'un jambon cru ou sec, fumé ou non. Cette opération, dite de cubage du jambon, permet de revaloriser des parties du jambon qui sont en général issues des ateliers de tranchage puis broyées pour être utilisées dans des saucissons ou des rillettes.

Dans une seconde étape, on trempe ces lamelles pendant quelques secondes, typiquement pendant 8 à 12 secondes, dans un bain constitué par de la graisse de canard filtrée avant utilisation et contenant 100% de gras de canard. Cette graisse est par exemple récupérée, après la cuisson de confits de canard, au niveau des cuisses, des manchons ou des magrets.

Le bain de graisse de canard est porté à une température proche de 170°C de telle sorte que le trempage aboutit à une cuisson, préférentiellement à coeur, et à un confisage des lamelles.

La découpe des produits en fines lamelles est ainsi très importante puisque la dimension est directement corrélée avec la cuisson des lamelles de telle sorte que celle-ci soient saisies à coeur. En effet, il existe un lien étroit entre la qualité de confisage et le transfert de chaleur au sein du produit, le gradient de température vers le coeur du produit étant directement lié à l'épaisseur de ce dernier.

Par la suite, on réalise un égouttage des lamelles pour éliminer le surplus de graisse afin de donner un bel aspect au produit fini, par exemple en les déplaçant dans l'air, notamment par vibration,

Une fois égouttées, on peut conditionner les lamelles, par exemple dans des sachets sous atmosphère.

Le produit ainsi obtenu présente une couleur spécifique plus claire que la couleur habituelle du jambon sec. Il présente également une texture plus fibrée et un peu plus ferme que celle du jambon sec, et surtout un nouveau goût très typé au léger parfum de canard.

En plus de développer des propriétés organoleptiques particulières, ce procédé permet une valorisation noble des sous-produits du jambon sec issus du tranchage, lesquels sont ainsi utilisés tels quels comme ingrédient principal et unique du produit final puisqu'ils ne sont pas destructurés par un broyage ou un hachage.

Il doit être bien entendu toutefois que cet exemple est donné uniquement à titre d'illustration de l'objet de l'Invention dont il ne constitue en aucune manière une limitation.

Ainsi, bien que le procédé soit décrit en relation avec un jambon cru ou sec, il est possible de le mettre en oeuvre avec un jambon cuit.

Les dimensions, températures et durées données dans l'exemple de réalisation sont indicatives et peuvent varier dans les plages indiquées sans remettre en cause la portée de l'invention ni changer notablement les propriétés organoleptiques du produit final.

Ainsi, la durée de trempage conseillée de 8 à 12 secondes peut être légèrement augmentée, notamment en cas de diminution de la température du bain de graisse, ou alors lorsque l'on trempe une très grande quantité de lamelles simultanément car le transfert de chaleur est réparti entre toutes les lamelles. Cependant, le traitement devra rester dans un couple temps court / température élevée.

Il est également possible d'utiliser de la graisse d'oie, bien que celle-ci soit plus fade en goût et donc plus neutre, et qu'elle résiste moins bien à de hautes températures.

L'égouttage doit être réalisé dans de bonnes conditions d'hygiène et ne doit pas durer trop longtemps pour éviter de rancir le produit ou qu'il perde de ses propriétés organoleptiques avant son conditionnement. Il pourra être réalisé de manière statique, sans aucun déplacement des lamelles, ou bien à l'aide d'un jet d'air sous pression qui est préalablement filtré pour des questions d'hygiène.

Les lamelles confites peuvent également être conditionnées dans des sachets sous vide si besoin.

## Revendications

1. Produit de charcuterie à base de jambon, **caractérisé en ce qu'**il se présente sous la forme de lamelles confites dans de la graisse de volaille.

2. Produit de charcuterie selon la revendication 1, **caractérisé en ce qu'**il s'agit de lamelles de jambon sec présentant un goût et un parfum de canard.

3. Produit de charcuterie selon la revendication 1 ou 2, **caractérisé en ce que** chaque lamelle mesure environ 1,5 à 2,5 mm d'épaisseur, environ 1 à 10 cm de longueur et environ 6 à 25 mm de largeur.

4. Produit de charcuterie selon la revendication 3, **caractérisé en ce que** les lamelles mesurent préférentiellement sensiblement 2 mm d'épaisseur, 5 à 7 cm de longueur et 8 mm de largeur.

5. Procédé de transformation d'un produit de charcuterie à base de jambon, **caractérisé en ce qu'**il comprend les étapes suivantes :
- confire des lamelles dudit produit en les trempant dans de la graisse liquide de volaille portée à une température suffisante pour cuire au moins partiellement lesdites lamelles,
- égoutter les lamelles.

6. Procédé selon la revendication 5, **caractérisé en ce qu'**il comprend de plus une étape préalable de tranchage des lamelles dans un jambon sec, éventuellement fumé, notamment dans le jarret ou l'entame.

7. Procédé selon la revendication 5 ou 6, **caractérisé en ce** l'on trempe les lamelles dans de la graisse de canard.

8. Procédé selon la revendication 7, **caractérisé en ce que** la graisse de canard est récupérée après cuisson de confits, suivie par une opération de filtrage.

9. Procédé selon l'une quelconque des revendications 5 à 8, **caractérisé en ce que**, lors de l'étape de trempage des lamelles, on chauffe la graisse à une température comprise entre environ 120°C et 190°C, et de préférence entre 140° et 180°.

10. Procédé selon la revendication 9, **caractérisé en ce que** la graisse est portée à une température proche de 170°C pendant toute la durée du trempage.

11. Procédé selon l'une quelconque des revendications 5 à 10, **caractérisé en ce que** l'on trempe les lamelles dans la graisse chauffée pendant une durée comprise entre environ 4 et 20 secondes, et de préférence entre 8 et 12 secondes.

12. Procédé selon l'une quelconque des revendications 5 à 11, **caractérisé en ce que** l'égouttage est réalisé par déplacement des lamelles dans l'air.

13. Procédé selon la revendication 12, **caractérisé en ce que** l'égouttage est réalisé par vibration des lamelles.

## Patentansprüche

1. Fleisch- und Wurstwarenerzeugnis auf der Grundlage von Schinken,
**dadurch gekennzeichnet,**
**dass** es in Form von dünnen Scheiben vorliegt, eingelegt in Geflügelfett.

2. Fleisch- und Wurstwarenerzeugnis gemäß Anspruch 1,
**dadurch gekennzeichnet,**
**dass** es sich um dünne Scheiben eines trockenen Schinkens handelt, die einen Geschmack und Duft nach Ente zeigen.

3. Fleisch- und Wurstwarenerzeugnis gemäß Anspruch 1 oder 2,
**dadurch gekennzeichnet,**
**dass** jede dünne Scheibe eine Dicke von etwa 1,5 bis 2,5 mm, eine Länge von etwa 1 bis 10 cm und eine Breite von etwa 6 bis 25 mm misst.

4. Fleisch- und Wurstwarenerzeugnis gemäß Anspruch 3,
**dadurch gekennzeichnet,**
**dass** die dünnen Scheiben vorzugsweise eine Höhe von etwa 2 mm, eine Länge von 5 bis 7 cm und eine Breite von 8 mm bemessen.

5. Verfahren zum Umformen eines Fleisch- und Wurstwarenerzeugnisses auf der Grundlage von Schinken,
**dadurch gekennzeichnet,**
**dass** es die folgenden Schritte umfasst:
- Einlegen von dünnen Scheiben des Erzeugnisses, wobei diese gehärtet werden, in ein flüssiges Geflügelfett, erwärmt auf eine Temperatur, die ausreichend ist, um diese dünnen Scheiben zumindest teilweise zu kochen,
- Abtropfen der dünnen Scheiben.

6. Verfahren nach Anspruch 5,
**dadurch gekennzeichnet,**
**dass** es weiter einen vorhergehenden Schritt des Schneidens von dünnen Scheiben aus einem trockenen Schinken umfasst, der eventuell geräuchert ist, nämlich aus dem Knie oder dem ersten Stück.

7. Verfahren nach Anspruch 5 oder 6,
**dadurch gekennzeichnet,**
**dass** man die dünnen Scheiben in Entenschmalz tränkt.

8. Verfahren nach Anspruch 7,
**dadurch gekennzeichnet,**
**dass** das Entenschmalz zurückgewonnen wird vor dem Kochen des in Fett eingelegten Fleisches, gefolgt von einem Filtervorgang.

9. Verfahren nach einem der Ansprüche 5 bis 8,
**dadurch gekennzeichnet,**
**dass** während des Schritts des Einweichens der dünnen Scheiben man das Fett auf eine Temperatur zwischen etwa 120°C und 190°C und vorzugsweise zwischen 140°C und 180°C erwärmt.

10. Verfahren nach Anspruch 9,
**dadurch gekennzeichnet,**
**dass** das Fett auf eine Temperatur nahe 170°C während der gesamten Dauer des Tränkens erwärmt wird.

11. Verfahren nach einem der Ansprüche 5 bis 10,
**dadurch gekennzeichnet,**
**dass** man die dünnen Scheiben in dem erwärmten Fett tränkt während einer Zeitdauer zwischen etwa 4 und 20 Sekunden und vorzugsweise zwischen 8 und 12 Sekunden.

12. Verfahren nach einem der Ansprüche 5 bis 11,
**dadurch gekennzeichnet,**
**dass** das Abtropfenlassen durch Verlagern der dünnen Scheiben in die Luft realisiert wird.

13. Verfahren nach Anspruch 12,
**dadurch gekennzeichnet,**
**dass** das Abtropfenlassen durch Rütteln der dünnen Scheiben realisiert wird.

## Claims

1. Meat product with a base of ham, **characterised in that** it is prepared in the form of slices in a conserve of poultry fat.

2. Meat product as claimed in claim 1, **characterised in that** it comprises slices of dry ham with a flavour and a smell of duck.

3. Meat product as claimed in claim 1 or 2, **characterised in that** each slice measures approximately 1.5 to 2.5 mm in thickness, approximately 1 to 10 cm in length and approximately 6 to 25 mm in width.

4. Meat product as claimed in claim 3, **characterised in that** the slices preferably essentially measure 2 mm in thickness, 5 to 7 cm in length and 8 mm in width.

5. Method of processing a meat product with a base of ham, **characterised in that** it comprises the following steps:
- slices of said product are conserved by steeping them in liquid poultry fat at a temperature which is sufficient at least partially to cook said slices,
- the slices are drained.

6. Method as claimed in claim 5, **characterised in that** it additionally comprises a prior step of cutting slices from a dry ham, which may or may not be smoked, in particular from inside the leg or from the outer leg.

7. Method as claimed in claim 5 or 6, **characterised in that** the slices are steeped in duck fat.

8. Method as claimed in claim 7, **characterised in that** the duck fat is recovered after cooking the conserves, followed by a filtering operation.

9. Method as claimed in any one of claims 5 to 8, **characterised in that**, during the step of steeping the slices, the fat is heated to a temperature in the range of between about 120°C and 190°C and preferably between 140° and 180°.

10. Method as claimed in claim 9, **characterised in that** the fat is raised to a temperature close to170°C throughout the entire duration of the steeping step.

11. Method as claimed in any one of claims 5 to 10, **characterised in that** the slices are steeped in the heated fat for a period of between about 4 and 20 seconds and preferably between 8 and 12 seconds.

12. Method as claimed in any one of claims 5 to 11, **characterised in that** the draining step is operated by displacing the slices through air.

13. Method as claimed in claim 12, **characterised in that** the draining step is operated by vibrating the slices.
